# EUROPEAN PATENT APPLICATION

(11) **EP 4 518 195 A1**
(43) Date of publication of application: **05.03.2025**
(21) Application number: 23806497.6
(22) Date of filing: 05.01.2023
(51) Int. Cl.: H04B 10/2513

(54) **OPTICAL COMMUNICATION DEVICE**

(30) Priority: 20.05.2022 CN 202210550680
(71) Applicant: Huawei Technologies Co., Ltd., Shenzhen, Guangdong 518129 (CN)
(72) Inventor: QUAN, Mingran, Shenzhen, Guangdong 518129 (CN); XIAO, Xinhua, Shenzhen, Guangdong 518129 (CN); ZHAO, Junying, Shenzhen, Guangdong 518129 (CN); LI, Yuetao, Shenzhen, Guangdong 518129 (CN); GU, Yichen, Shenzhen, Guangdong 518129 (CN)
(74) Representative: MERH-IP Matias Erny Reichl Hoffmann Patentanwälte PartG mbB
(86) International application number: PCT/CN2023/070783
(87) International publication number: WO 2023/221535

(57) **Abstract**

Embodiments of this application provide an optical communication device, including a light-transmitting solid-state medium unit, and further including an input and output unit, a dispersion unit, and a switching unit that are separately disposed on wall surfaces of the medium unit. An input port of the input and output unit inputs an optical signal into the medium unit and transmits the optical signal to the dispersion unit. The dispersion unit disperses the optical signal into a plurality of sub-beams and transmits the sub-beams to the switching unit. The switching unit respectively deflects, in preset angles, the sub-beams to form deflected sub-beams, and enables the plurality of deflected sub-beams to be output from the medium unit and transmitted to a corresponding output port. This implements grooming and assignment of wavelengths of the optical signal. The dispersion unit, the switching unit, the input and output unit, and the like are integrated on the medium unit, and the optical signal is transmitted and separated in the medium unit, so that impact of an environment change on optical transmission is reduced or avoided, and no shell with a high sealing level needs to be disposed. This significantly reduces sealing costs and reduces costs and a size of the optical communication device.

## Description

This application claims priority to Chinese Patent Application No. 202210550680.9, filed with the China National Intellectual Property Administration on May 20, 2022, and entitled "OPTICAL COMMUNICATION DEVICE", which is incorporated herein by reference in its entirety.

### TECHNICAL FIELD

This application relates to the field of communication technologies, and in particular, to an optical communication device.

### BACKGROUND

An optical communication technology is a communication manner in which an optical wave is used as a transmission medium. An optical communication device is a communication device that uses the optical wave to transmit information, and is a device commonly used in the optical communication technology. An optical wavelength selective switch is used as an example, so that wavelength grooming can be implemented, remote and dynamic wavelength assignment can be implemented, and switching, attenuation, or blocking of optical signals of any wavelength or any wavelength combination at any port can be implemented. The optical wavelength selective switch is one of important components in the current optical communication industry.

The optical wavelength selective switch is generally constructed by discrete optical elements, for example, may include a dispersion element and a switching element. The dispersion element can disperse a multiplexed optical signal on a dispersion plane, so that the optical signal is dispersed into a plurality of sub-beams of different wavelengths and the sub-beams are irradiated to different partitions of the switching element. In this way, a switching unit can independently process a sub-beam of a specific wavelength. The switching element may deflect the plurality of sub-beams on a switching plane, so that at least one sub-beam of a specific wavelength is separated from other sub-beams and output independently. This implements grooming and assignment of the optical signal wavelength. The optical wavelength selective switch further includes a sealing housing and a sealing cover. The sealing housing and the sealing cover jointly form a sealing cavity. Optical elements such as the dispersion element and the switching element may be disposed in the sealing cavity. The sealing housing and the sealing cover form a sealing environment to reduce impact of an environment change on beam propagation and protect the optical elements. The sealing cavity may be filled with an inert gas, to be used as a propagation medium of the beam. To further reduce impact of the environment on propagation of the beam in the gas medium, a high sealing requirement is imposed on the sealing cavity. For example, a high sealing level is required for the sealing housing, the sealing cover, and a joint between the sealing housing and the sealing cover, and airtight packaging is required.

However, sealing costs of airtight packaging are high, resulting in high manufacturing costs of the optical wavelength selective switch.

### SUMMARY

This application provides an optical communication device, to resolve a problem of high manufacturing costs of a conventional optical communication device caused by high sealing costs of the optical communication device.

This application provides an optical communication device, including a medium unit, where the medium unit is a light-transmitting solid-state medium, and the medium unit includes a plurality of wall surfaces; and
further including an input and output unit, a dispersion unit, and a switching unit that are separately disposed on wall surfaces of the medium unit, where the input and output unit includes an input port and a plurality of output ports, and the input port is configured to: input an optical signal into the medium unit, and enable the optical signal to be transmitted to the dispersion unit, where the optical signal includes a plurality of sub-beams of different wavelengths, where
the dispersion unit is configured to: disperse the optical signal into the plurality of sub-beams on a dispersion plane, and enable the plurality of sub-beams to be transmitted to different partitions of the switching unit, and the switching unit is configured to: respectively deflect, in preset angles, the plurality of sub-beams on a switching plane to form deflected sub-beams, enable the deflected sub-beam to be output from the medium unit and transmitted to a corresponding output port, where the output port is configured to output the deflected sub-beam. In other words, a multiplexed optical signal may be input into the medium unit through the input port, and the optical signal is transmitted to the dispersion unit in the medium unit. On the dispersion plane, the dispersion unit disperses the optical signal into the plurality of sub-beams of different wavelengths, and the plurality of sub-beams continue to be transmitted in the medium unit and irradiated to different areas of the switching unit. On the switching plane, the switching unit respectively deflects, in preset angles, the sub-beams in the different areas to form the plurality of deflected sub-beams, and if the different deflection angles of the sub-beams, emergent angles of the deflected sub-beams are different. The plurality of deflected sub-beams return along original paths. After passing through the dispersion unit, the sub-beam is output to the outside of the medium unit via wall surfaces of the medium unit, and can be transmitted to the corresponding output port, and the output port outputs the deflected sub-beam to the outside of the optical communication device. This implements grooming and assignment of wavelengths of the optical signal.

In other words, the dispersion unit, the switching unit, the input and output unit, and the like are integrated into the medium unit, and the optical signal is transmitted and separated in the medium unit, to implement grooming and assignment of wavelengths of the optical signal. In a process in which the signal is input from the input and output unit and is output after separation, the signal is transmitted in the solid-state medium unit instead of being transmitted in gas. This can reduce or avoid impact of an environment change on optical transmission. There is no need to dispose a shell for carrying the dispersion unit and the switching unit, and no need to implement an airtight-level structure. In this way, a sealing requirement for the optical communication device is significantly reduced, packaging costs are greatly reduced, and further, manufacturing costs of the optical communication device are reduced.

In addition, if there is no need to dispose the shell or a shell with a high sealing level, a structure of the optical communication device can be simplified, impact of disposition of the shell on a size of the optical communication device can also be avoided, and in particular, the size of the optical communication device in a height direction can be significantly reduced. This is conducive to miniaturization of the size of the optical communication device.

In a possible implementation, the optical communication device further includes a first reflection unit disposed on a wall surface of the medium unit, where the first reflection unit is configured to reflect, to the dispersion unit, the optical signal input into the medium unit; and
the first reflection unit is further configured to: collimate the sub-beams obtained through dispersion performed by the dispersion unit, and reflect the sub-beams to the switching unit. The first reflection unit has a collimation function, so that the plurality of sub-beams of different wavelengths are evenly distributed on different partitions of the switching unit. This helps improve a shape and an appearance of a light spot formed on the switching unit, and helps improve performance of the optical communication device.

In addition, the first reflection unit can further implement reflection and folding of an optical path. This helps reduce a path length of an optical path between the input and output port and the switching unit, to help further reduce the size of the optical communication device.

In a possible implementation, a reflection surface of the first reflection unit is a curved surface, so that the first reflection unit can collimate the sub-beams.

In a possible implementation, the optical communication device further includes a second reflection unit disposed on a wall surface of the medium unit, where the second reflection unit is configured to reflect, to the first reflection unit, the optical signal input into the medium unit. The second reflection unit can adjust an incident angle of the optical signal transmitted to the first reflection unit, so that the first reflection unit can perform total reflection, and reflect the optical signal to the dispersion unit. In this way, a requirement on the incident angle of the optical signal input through the input and output unit from the wall surface can be lower. This facilitates implementation.

In a possible implementation, the optical communication device further includes a first optical path folding unit disposed on a wall surface of the medium unit. The first optical path folding unit is configured to reflect, to the first reflection unit, the optical signal input into the medium unit, and the first optical path folding unit is further configured to reflect, to the dispersion unit, the optical signal reflected by the first reflection unit. Reflection and folding of optical paths between the input and output unit and the first reflection unit and between the first reflection unit and the dispersion unit are implemented by using the first optical path folding unit, so that a path length of an optical path between the input and output unit and the dispersion unit is reduced.

The first optical path folding unit is further configured to reflect, to the first reflection unit, the sub-beams obtained through dispersion performed by the dispersion unit, and the first optical path folding unit is further configured to reflect, to the switching unit, the sub-beams reflected by the first reflection unit. Reflection and folding of optical paths between the dispersion unit and the first reflection unit and between the first reflection unit and the switching unit are implemented by using the first optical path folding unit, so that a path length (a length in a direction y) of an optical path between the dispersion unit and the switching unit is reduced. In other words, an optical path between the input and output unit and the switching unit is folded by using the first optical path folding unit, and this helps further reduce the size of the optical communication device.

In a possible implementation, the first optical path folding unit includes a first reflection surface and a second reflection surface; the first optical path folding unit is specifically configured to enable the optical signal input into the medium unit to be transmitted to the first reflection unit via the first reflection surface and the second reflection surface in sequence, and the first optical path folding unit is further specifically configured to enable the optical signal reflected by first reflection unit to be transmitted to the dispersion unit via the second reflection surface and the first reflection surface in sequence; and
the first optical path folding unit is further specifically configured to enable the sub-beams obtained through dispersion performed by the dispersion unit to be transmitted to the first reflection unit via the first reflection surface and the second reflection surface in sequence, and the first optical path folding unit is further specifically configured to enable the sub-beams reflected by the first reflection unit to be transmitted to the switching unit via the second reflection surface and the first reflection surface in sequence. The two reflection surfaces (the first reflection surface and the second reflection surface) are used, to implement two times of reflection and folding of the optical path, so that the optical path is transmitted between two layers, and the path length (the length in the direction y) of the optical path between the input unit and the switching unit is further compressed. This further folds the optical path and further reduces the size of the optical communication device.

In a possible implementation, the first reflection surface is perpendicular to the second reflection surface, and both the first reflection surface and the second reflection surface are 45° reflection surfaces. When the plurality of sub-beams reflected by the first reflection unit are respectively irradiated, at 45° incident angles, to the second reflection surface, emergent angles of the sub-beams reflected by the second reflection surface each are 45°. In this case, incident angles of the sub-beams irradiated to the first reflection surface each are 45°, and emergent angles of the sub-beams emitted from the first reflection surface each are 45°. In this way, transmission directions of the sub-beams irradiated to the second reflection surface are parallel to and opposite to transmission directions of the sub-beams emitted from the first reflection surface, that is, optical paths of the sub-beams each are vertically folded by using the first reflection surface and the second reflection surface. This further compresses a path of the optical path, helps further reduce the size of the optical communication device, and can also ensure that the plurality of sub-beams are collimated and then irradiated to the switching unit.

In a possible implementation, the optical communication device further includes a second optical path folding unit disposed on a wall surface of the medium unit, where the switching unit is disposed on the second optical path folding unit; and
the second optical path folding unit is configured to reflect, to the switching unit, the sub-beams reflected by the first optical path folding unit. This improves flexibility of a design of the structure of the optical communication device, and helps increase application scenarios of the optical communication device.

In a possible implementation, the second optical path folding unit includes a third reflection surface and a light-transmitting surface, and the switching unit is disposed on the light-transmitting surface; and
the second optical path folding unit is specifically configured to enable the sub-beams reflected by the first optical path folding unit to be transmitted to the switching unit via the third reflection surface and the light-transmitting surface in sequence.

In a possible implementation, the third reflection surface and the light-transmitting surface are disposed at a 45° included angle, and the third reflection surface is a 45° reflection surface. When the plurality of sub-beams reflected by the first optical path folding unit are respectively irradiated, at 45° incident angles, to the third reflection surface, emergent angles of the sub-beams emitted from the third reflection surface each are 45°. In this case, the plurality of sub-beams are collimated and irradiated to the light-transmitting surface. This can ensure that the plurality of sub-beams are collimated and irradiated to the switching unit.

In a possible implementation, the input and output unit, the first reflection unit, and the switching unit are located on a same wall surface of the medium unit; and the first reflection unit and the first optical path folding unit are respectively located on two opposite wall surfaces of the medium unit. This helps reduce wall surfaces of the medium unit and improve integration of the medium unit.

In a possible implementation, the dispersion unit is detachably disposed on a wall surface of the medium unit; and the first reflection unit is detachably disposed on the wall surface of the medium unit. In this way, the dispersion unit and the first reflection unit can be independently adjusted, and disposition flexibility of the dispersion unit and disposition flexibility of the first reflection unit are improved.

In a possible implementation, the dispersion unit is a dispersion element formed on a wall surface of the medium unit; and the first reflection unit is a reflective film layer formed on the wall surface of the medium unit. This helps improve disposition stability of the dispersion unit and the first reflection unit.

In a possible implementation, a dispersion surface of the dispersion unit is a curved surface, and the deflected sub-beams formed through the switching unit can be collimated on the switching plane, so that each sub-beam can be output from a corresponding output port.

In a possible implementation, there are a plurality of input and output units, so that a plurality of optical signals can be integrated, and a plurality of multiplexed beams can be simultaneously input into the optical communication device. This helps reduce costs of an entire transmission system.

The wall surfaces of the medium unit include an input and output wall surface, and the plurality of input and output units are disposed on the input and output wall surface at intervals, that is, the plurality of input and output units are located on a same wall surface of the medium unit. This helps reduce the wall surfaces required by the medium unit, and further reduce a size of the medium unit.

In a possible implementation, the input and output unit includes an optical fiber array, the optical fiber array includes a plurality of optical fibers, the plurality of optical fibers are configured to form the input port and the output port, and end faces of the plurality of optical fibers are opposite to the input and output wall surface, to implement signal transmission between the optical fibers and the medium unit, and reduce or avoid signal transmission in gas.

In a possible implementation, a formed material of the medium unit is glass or an organic material.

### BRIEF DESCRIPTION OF DRAWINGS

FIG. 1 is a diagram of an optical path of an optical communication device according to an embodiment of this application;
FIG. 2 is a diagram of a structure of an optical communication device according to an embodiment of this application;
FIG. 3 is a diagram of another structure of an optical communication device according to an embodiment of this application;
FIG. 4 is a diagram of still another structure of an optical communication device according to an embodiment of this application;
FIG. 5 is a diagram of a structure of a dispersion unit according to an embodiment of this application;
FIG. 6 is a diagram of yet another structure of an optical communication device according to an embodiment of this application;
FIG. 7 is a diagram of still yet another structure of an optical communication device according to an embodiment of this application;
FIG. 8 is a diagram of a further structure of an optical communication device according to an embodiment of this application;
FIG. 9 is a diagram of a still further structure of an optical communication device according to an embodiment of this application; and
FIG. 10 is a diagram of a yet further structure of an optical communication device according to an embodiment of this application.

Descriptions of reference numerals:
100: optical communication device; 110: input and output unit; 111: input port;
112: output port; 120: medium unit; 130: dispersion unit;
140: switching unit; 150: first reflection unit; 160: second reflection unit;
170: first optical path folding unit; 171: first reflection surface; 172: second reflection surface;
180: second optical path folding unit; 181: third reflection surface; 182: light-transmitting surface.

### DESCRIPTION OF EMBODIMENTS

Terms used in implementations of this application are only used to explain specific embodiments of this application, but are not intended to limit this application.

Embodiments of this application provide an optical communication device, which is a device for implementing information transmission by using an optical wave as a carrier. Specifically, the optical communication device may implement selection, separation, grooming, assignment, and the like for wavelengths. For example, the communication device may be an optical wavelength selective switch, an optical switch, an optical filter, an optical wavelength detector, and the like.

The following describes an optical path architecture of the optical communication device by using an example in which the optical communication device is an optical wavelength selective switch. The optical wavelength selective switch has a function of selecting and separating a beam of a specific wavelength from input wavelengths for outputting, to implement wavelength grooming of an optical signal, and can implement wavelength assignment remotely and dynamically. In this way, the optical wavelength selective switch is widely used in an optical transport network system.

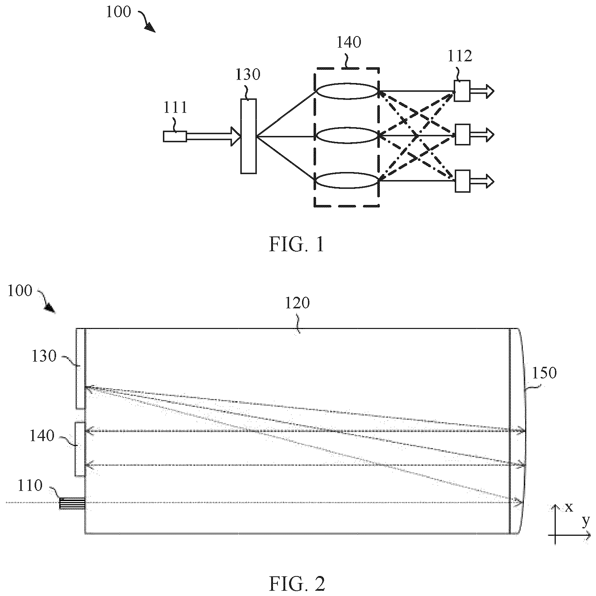

FIG. 1 is a diagram of an optical path of an optical communication device according to an embodiment of this application.

As shown in FIG. 1, an optical communication device 100 may include an input port 111, a dispersion unit 130, a switching unit 140, and an output port 112. There may be one input port 111 and a plurality of output ports 112. Specifically, a quantity of output ports 112 may be the same as a quantity of beams selected by the optical communication device 100 for separation.

An optical signal may be input to the optical communication device 100 through the input port 111. The optical signal may be multiplexed light, and is formed by multiplexing a plurality of sub-beams of different wavelengths together. Wavelengths of the sub-beams may be commonly used wavelengths in an optical communication system, and specific wavelength values may be selected and set as required. The optical signal input from the input port 111 may be polarized light, or may be non-polarized light.

In this embodiment of this application, the input port 111 and the plurality of output ports 112 may be located on a same side of the optical communication device, and are arranged in a stacked manner. A direction of stacked arrangement is a direction x (for example, the direction x in FIG. 2). The direction x may be a height direction of the optical communication device 100. A direction perpendicular to the direction x and a propagation direction of the optical signal input through the input port 111 are a direction y (for example, the direction y in FIG. 2). The direction y may be a length direction of the optical communication device 100. A plane on which the direction x and the direction y may be a switching plane of the optical communication device 100, and a plane perpendicular to the switching plane may be a dispersion plane of the optical communication device 100.

Still as shown in FIG. 1, a beam input from the input port 111 may pass through the dispersion unit 130 and the switching unit 140 in sequence and then be output from the output port 112. The dispersion unit 130 may disperse the beam on the dispersion plane. Specifically, the optical signal input from the input port 111 is irradiated to the dispersion unit 130. On the dispersion plane, the dispersion unit 130 may disperse the optical signal into a plurality of sub-beams of different wavelengths, and irradiate, to the switching unit 140, the sub-beams obtained through dispersion. The switching unit 140 has different partitions, to correspond to different wavelengths. The sub-beams of different wavelengths may be respectively irradiated to the corresponding partitions of the switching unit 140, and form light spots on the corresponding partitions, so that the switching unit 140 can implement independent control on each of the sub-beams of different wavelengths. In this way, separation and output of a signal of a specific wavelength is implemented.

The switching unit 140 can play a role of deflecting a beam. Specifically, the switching unit 140 may implement a deflection function on the sub-beams of different wavelengths, and on the switching plane, may deflect, in preset angles, the plurality of sub-beams irradiated to the switching plane. The switching unit 140 may perform adjustment and control on different areas, that is, may implement independent control on each of the sub-beams of different wavelengths. In this way, the switching unit 140 can implement control on the deflection angles of the sub-beams of different wavelengths. If the deflection angles of the sub-beams are different, deflected sub-beams formed from the sub-beams are irradiated to different output ports 112 correspondingly. For example, if a deflection angle of a sub-beam of one wavelength is different from that of another sub-beam, a deflected sub-beam of the wavelength may be output from a corresponding output port 112. This implements separation and output of a signal of the wavelength, and further implements grooming and assignment of wavelengths of the optical signal.

It should be noted that, a beam obtained through separation by the optical communication device 100 may include a sub-beam of one wavelength, or the beam obtained through separation may include sub-beams of a plurality of wavelengths, for example, sub-beams of two wavelengths are deflected and then output from a same output port 112, to implement wavelength multiplexing and output of the sub-beams of the two wavelengths. A specific separation manner may be selected and set based on a requirement of the communication system.

As shown in FIG. 1, there are N output ports 112, where N is greater than 1. The optical signal input from an input port 111 is separated into the plurality of sub-beams of different wavelengths after passing through the dispersion unit 130. The plurality of sub-beams of different wavelengths may be selectively output from any one of the N output ports 112 under deflection by the switching unit 140.

Certainly, in some other examples, there may alternatively be a plurality of input ports 111. In other words, a plurality of multiplexed optical signals may be separately input to the optical communication device 100 through corresponding input ports 111, to implement integration of the plurality of optical signals.

In addition, there may be one or more switching units 140 in the optical communication device 100.

Because the optical communication device includes a discrete and independent switching unit, dispersion unit, and the like, a common optical communication device like an optical wavelength selective switch further includes a shell for carrying the dispersion unit, the switching unit, and the like, to carry and protect the dispersion unit, the switching unit, and the like. Specifically, the shell may include a sealing housing and a sealing cover that covers the sealing housing. The sealing housing and the sealing cover jointly form a sealing cavity. The dispersion unit and the switching unit are disposed in the sealing cavity. The sealing cavity is filled with an inert gas, to be used as a propagation medium of the beam, and the optical communication device may further include an optical element like a lens, to adjust an optical path and a light spot. The shell may further include some housing mechanical parts that have a protection function and that are stacked on the sealing housing and the sealing cover.

However, propagation of the beam is easily affected by an environment. Specifically, a change of ambient atmospheric pressure, humidity, or temperature likely causes a frequency offset of an optical wavelength, resulting in shifting of a light spot position on the switching unit, namely, shifting of a light spot of each wavelength relative to a partition corresponding to the light spot. In this case, accuracy of deflecting each sub-beam through the switching unit is affected (for example, a light spot is shifted relative to a corresponding partition, and some sub-beams are shifted out of the partition, and consequently, the some sub-beams cannot be deflected in preset angles, and a proportion of deflected sub-beams is reduced, that is, a proportion of output sub-beams is reduced), and filter passband performance of the optical communication device is reduced.

Therefore, generally, a high requirement is imposed on sealing performance of the shell of the optical communication device. For example, a high requirement is imposed on the sealing housing, the sealing cover, and a joint between the sealing housing and the sealing cover, and airtight packaging is required. In other words, the shell of the optical communication device adopts an airtight packaging manner, to prevent an environment change in the sealing cavity caused by entering of moisture, dust, and the like.

However, a sealing level of a packaging manner for the shell of the optical communication device needs to be high, and sealing costs are high. This increases manufacturing costs of the optical communication device. In addition, the shell used to carry independent elements such as the dispersion unit and the switching unit leads to increasing of a size of the optical communication device. Especially, a shell that can achieve a high sealing level has a large height size, resulting in increasing of the size of the optical communication device. This is not conducive to a small-size development requirement of the optical communication device.

In addition, in mass production of the optical communication device, sealing is usually the last processing step, and a yield loss may be caused because the sealing requirement cannot be met, resulting in increasing of a scrap rate of the entire device. This further increases the manufacturing costs.

Based on this, embodiments of this application provide an optical communication device, to integrate a dispersion unit and a switching unit into a light-transmitting solid-state medium unit, so that an optical signal is transmitted in the medium unit, to reduce or avoid impact of an environment on optical transmission. In addition, no additional shell of airtight packaging is required, so that sealing costs of the optical communication device are effectively reduced, manufacturing costs of the optical communication device are further reduced, and a size of the optical communication device is significantly reduced.

The following describes a structure of the optical communication device in detail with reference to accompanying drawings by using an example in which the optical communication device is an optical wavelength selective switch.

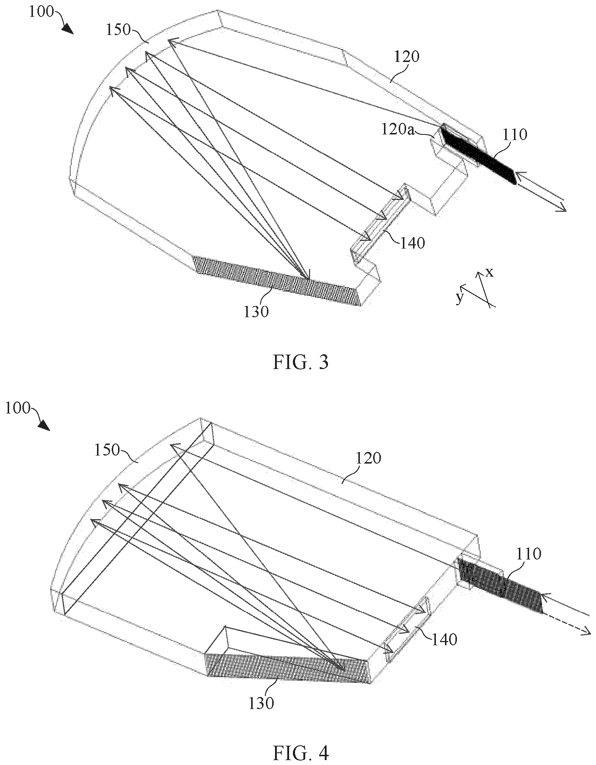

FIG. 2 is a diagram of a structure of an optical communication device according to an embodiment of this application. FIG. 3 is a diagram of another structure of an optical communication device according to an embodiment of this application.

As shown in FIG. 2, the optical communication device 100 includes a medium unit 120, and an input and output unit 110, a dispersion unit 130, and a switching unit 140 that are disposed on the medium unit 120. The input and output unit 110 includes the input port 111 and the plurality of output ports 112. The input port 111 and the output ports 112 may be stacked to form an input and output unit 110, that is, the input port 111 and the output ports 112 are integrated into one module.

The medium unit 120 is formed by a solid-state medium and is light-transmitting. In other words, the medium unit 120 may be used as a propagation medium of a beam, and the beam may be transmitted in the medium unit 120.

Specifically, the medium unit 120 may be a glass medium unit, that is, may be a medium structure formed through glass molding. Certainly, in some other examples, the medium unit 120 may alternatively be of another solid-state medium structure. For example, the medium unit 120 may be a solid-state medium structure made of an organic material, for example, a solid-state structure made of a material like transparent resin or transparent plastic.

With reference to FIG. 3, the medium unit 120 may include a plurality of wall surfaces. Specifically, the wall surfaces are configured to carry the dispersion unit 130, the switching unit 140, and the like. The input and output unit 110, the dispersion unit 130, and the switching unit 140 may be disposed on wall surfaces of the medium unit 120.

A quantity of wall surfaces may be selected and set based on a setting requirement. A shape of the medium unit 120 may be a quadrilateral, a hexagon, or another regular or irregular polygon shape. A side end surface on each side of the medium unit 120 correspondingly forms a wall surface.

A multiplexed optical signal may be input into the optical communication device 100 through the input port of the input and output unit 110. Specifically, the optical signal may be input into the medium unit 120 through the input and output unit 110 disposed on a wall surface of the medium unit 120, that is, the optical signal is input into the medium unit 120 through the input port of the input and output unit 110, and is transmitted in the medium unit 120.

The optical signal input into the medium unit 120 may be transmitted to the dispersion unit 130. On a dispersion plane, the dispersion unit 130 disperses the optical signal into a plurality of sub-beams of different wavelengths, and the plurality of sub-beams continue to be transmitted in the medium unit 120 and irradiated to different areas of the switching unit 140. On a switching plane, through the switching unit 140, the sub-beams in the different areas are respectively deflected in preset angles to form a plurality of deflected sub-beams, and if the deflection angles of the sub-beams are different, emergent angles of the deflected sub-beams are different, so that the deflected sub-beams can be correspondingly transmitted to different output ports of the input and output unit 110. Specifically, the plurality of deflected sub-beams return along original paths. After passing through the dispersion unit 130, the sub-beams are output to the outside of the medium unit 120 via wall surfaces of the medium unit 120, and are transmitted to the corresponding output ports. The output ports of the input and output unit 110 output the deflected sub-beams to the outside of the optical communication device 100. This implements grooming and assignment of wavelengths of the optical signal.

In other words, in this embodiment of this application, the dispersion unit 130, the switching unit 140, the input and output unit 110, and the like are integrated into the medium unit 120, and the optical signal is transmitted and separated in the medium unit 120, to implement grooming and assignment of wavelengths of the optical signal. In other words, in a process in which the signal is input from the input and output unit 110 and is output after separation, the signal is transmitted in the solid-state medium unit 120 instead of being transmitted in gas. This can reduce or avoid impact of an environment change (for example, a temperature change and a humidity change) on optical transmission. There is no need to dispose the shell for carrying the dispersion unit 130 and the switching unit 140, and no need to implement an airtight-level structure. In this way, a sealing requirement for the optical communication device 100 is significantly reduced, packaging costs are greatly reduced, and further, manufacturing costs of the optical communication device 100 are reduced. In addition, a problem of a high scrap rate caused when sealing is completed at last can be reduced or avoided, to further reduce costs of the optical communication device 100.

In addition, if there is no need to dispose the shell or the shell with a high sealing level, the structure of the optical communication device 100 can be simplified, impact of disposition of the shell on a size of the optical communication device 100 can also be avoided, and in particular, the size of the optical communication device 100 in a height direction can be significantly reduced. This is conducive to miniaturization of the size of the optical communication device 100.

Certainly, in some examples, the optical communication device 100 may alternatively include a housing, and the medium unit 120 is disposed in the housing. The housing may protect the medium unit 120, and can also reduce impact of light or the like in an environment on optical signal transmission. The housing may be of a closed, semi-closed, or open structure, and does not need to implement airtight packaging, and costs of the housing are low. In addition, the housing with a low sealing level requirement has a simple structure and a small size.

Still as shown in FIG. 3, the optical communication device 100 may further include a first reflection unit 150, and the first reflection unit 150 is disposed on a wall surface of the medium unit 120. The optical signal that is input from the input port 111 to the medium unit 120 is transmitted to the first reflection unit 150, and the first reflection unit 150 can implement total reflection of light, and reflect the optical signal to the dispersion unit 130, so that the dispersion unit 130 disperses the optical signal.

The sub-beams obtained through dispersion performed by the dispersion unit 130 may be irradiated to the first reflection unit 150, and the first reflection unit 150 collimates the sub-beams and reflects the sub-beams to different partitions of the switching unit 140, so that the switching unit 140 implements independent control on each of the sub-beams of different wavelengths. The first reflection unit 150 has a collimation function, so that the plurality of sub-beams of different wavelengths are evenly distributed on different partitions of the switching unit 140. This helps improve a shape and an appearance of a light spot formed on the switching unit 140, and helps improve performance of the optical communication device 100.

In addition, the first reflection unit 150 can further implement reflection and folding of an optical path. This helps reduce path lengths (lengths in a direction y) of optical paths between the input and output unit 110 and the dispersion unit 130 and between the dispersion unit 130 and the switching unit 140, that is, reduce a path length of an optical path between the input and output unit 110 and the switching unit 140, and reduce a length of the medium unit 120, to help further reduce the size of the optical communication device 100. In addition, the dispersion unit 130, the first reflection unit 150, and the switching unit 140 can be used to meet a transmission requirement of the optical communication device 100, and a quantity of required wall surfaces of the medium unit 120 is small. This helps simplify a structure of the medium unit 120 and improves integration of the optical communication device 100.

Still as shown in FIG. 3 (dashed lines in the figure are optical paths), a multiplexed optical signal that is input from the input port of the input and output unit 110 to the medium unit 120 is transmitted in the medium unit 120 and irradiated to the first reflection unit 150. The first reflection unit 150 reflects the optical signal to the dispersion unit 130. The dispersion unit 130 disperses the optical signal into the plurality of sub-beams on the dispersion plane and transmits the plurality of sub-beams to the first reflection unit 150. The first reflection unit 150 collimates the plurality of sub-beams and transmits the sub-beams to the switching unit 140. Through the switching unit 140, the plurality of sub-beams are deflected in preset angles on the switching plane to form the deflected sub-beams, the plurality of deflected sub-beams return along the original paths, and then the deflected sub-beam is transmitted to a corresponding output port of the input and output unit 110 via the first reflection unit 150, the dispersion unit 130, and the first reflection unit 150 in sequence. The output port outputs the deflected sub-beam to the outside of the optical communication device 100. This implements grooming and assignment of wavelengths of the signal.

A reflection surface of the first reflection unit 150 may be a curved surface. For example, a surface that is of the first reflection unit 150 and that faces the medium unit 120 may be a concave surface, so that the first reflection unit 150 can collimate the sub-beams.

A reflection surface of the first reflection unit 150 may be a spherical surface. Certainly, in some examples, the first reflection unit 150 may alternatively be another type of curved surface, for example, an aspheric surface or another irregular curved surface.

In this embodiment of this application, as shown in FIG. 3, one wall surface of the medium unit 120 may be an input and output wall surface 120a, and the input and output unit 110 is disposed on the input and output wall surface 120a. In other words, the input port and the plurality of output ports are disposed on the input and output wall surface 120a in a stacked manner. The optical signal input from the input port is transmitted to the medium unit 120 through the input and output wall surface 120a. The deflected sub-beam deflected through the switching unit 140 is transmitted to the corresponding output port through the input and output wall surface 120a.

Specifically, the input and output unit 110 may include an optical fiber array, where the optical fiber array may include a plurality of optical fibers, some optical fibers in the plurality of optical fibers form the input port, and some optical fibers form the output port.

It should be understood that an end face of the optical fiber may be opposite to the input and output wall surface 120a, to implement signal transmission between the optical fiber and the medium unit 120, and reduce or avoid signal transmission in gas.

The input and output unit 110 may further include optical elements such as a collimating lens, a polarization beam splitting element, a cylindrical lens, and a waveplate, and can implement a function of adjusting and controlling an optical path and a light spot of an optical signal or a sub-beam. This helps improve performance of the optical communication device 100.

It should be noted that the input and output unit 110 should be attached to the input and output wall surface 120a of the medium unit 120, to reduce signal transmission in gas outside the medium unit 120. For example, the input and output unit 110 may be disposed on the input and output wall surface 120a of the medium unit 120 through a light-transmitting bonding layer. Certainly, in some other examples, the input and output unit 110 may alternatively be disposed on the input and output wall surface 120a in another manner. For example, the input and output unit 110 is disposed on the input and output wall surface 120a through a fastener like a clamping member.

In addition, an optical film layer may be further disposed on the input and output wall surface 120a, to improve transmittance for an optical signal, and reduce a loss caused when the signal is transmitted through the input and output wall surface 120a. For example, an antireflection coating may be disposed on the input and output wall surface 120a. Specifically, the optical film layer may be disposed on the input and output wall surface 120a through a bonding layer, or the optical film layer may be directly formed on the input and output wall surface 120a in a manner of spraying, electroplating, or the like.

FIG. 4 is a diagram of still another structure of an optical communication device according to an embodiment of this application.

The dispersion unit 130 may be a dispersion element disposed on a wall surface of the medium unit 120, and the dispersion unit 130 may be a grating, or the dispersion unit 130 may be another optical element having a wavelength dispersion function. For example, the dispersion unit 130 may be a prism grating, and the prism grating is an optical mechanical part including a prism and a grating.

As shown in FIG. 4, an example in which the dispersion unit 130 is a grating disposed on the wall surface of the medium unit 120 is used. The dispersion unit 130 may be detachably disposed on the medium unit 120. In this way, the dispersion unit 130 can be independently adjusted. This facilitates separate replacing of the dispersion unit 130, improves disposition flexibility of the dispersion unit 130, facilitates maintenance and replacement, and helps improve applicability of the optical communication device 100.

It should be understood that the dispersion unit 130 should be attached to the wall surface of the medium unit 120, to reduce signal transmission in gas outside the medium unit 120.

For example, the dispersion unit 130 may be disposed on the wall surface of the medium unit 120 through a light-transmitting bonding layer. Certainly, in some other examples, the dispersion unit 130 may alternatively be detachably disposed on the wall surface of the medium unit 120 in another manner. For example, the dispersion unit 130 may be attached to the wall surface of the medium unit 120 through a clamping member or the like.

Alternatively, the dispersion unit 130 may be a dispersion element directly formed on the wall surface of the medium unit 120, and has high disposition stability. For example, the dispersion unit 130 may be a grating structure directly formed on the wall surface of the medium unit 120 in a manner of etching, copying, or the like.

Correspondingly, still as shown in FIG. 4, the first reflection unit 150 may be an optical element that is disposed on the wall surface of the medium unit 120 and that can perform a reflection function. For example, the first reflection unit 150 may be a mirror reflector disposed on the wall surface of the medium unit 120, and the reflection surface of the first reflection unit 150 faces an inner side of the medium unit 120.

Specifically, the first reflection unit 150 may also be detachably disposed on the medium unit 120, so that the first reflection unit 150 can be independently adjusted, and disposition flexibility of the first reflection unit 150 is improved.

Correspondingly, the first reflection unit 150 should also be attached to the wall surface of the medium unit 120, to reduce signal transmission in gas outside the medium unit 120. For example, the first reflection unit 150 may include the reflection surface and an attached surface, the attached surface is a light-transmitting surface, and the reflection surface may be disposed opposite to the attached surface. The first reflection unit 150 is attached to the wall surface through the attached surface. For example, the attached surface is bonded to the wall surface of the medium unit 120 through a light-transmitting bonding layer, and an optical signal or a sub-beam may enter the first reflection unit 150 through the attached surface and be transmitted and radiated to the reflection surface for reflection.

Alternatively, the first reflection unit 150 may be a reflective film layer directly formed on the wall surface of the medium unit 120, and has high disposition stability. For example, the first reflection unit 150 may be a high reflection coating directly formed on the wall surface of the medium unit 120 in a manner of spraying, electroplating, or the like.

It should be noted that, when the first reflection unit 150 is a reflective film layer directly formed on the wall surface of the medium unit 120, a shape of the wall surface on which the first reflection unit 150 is disposed may be a curved surface, to make the reflection surface of the first reflection unit 150 be a curved surface.

The switching unit 140 may be a liquid crystal on silicon (Liquid Crystal on Silicon, LCOS for short) chip, or the switching unit 140 may be a micro-electro-mechanical system (Micro-Electro-Mechanical System, MEMS for short), or the switching unit 140 may be digital light processing (Digital Light Processing, DLP for short), or the switching unit 140 may be a liquid crystal switch chip or another chip that can implement optical path switching.

The switching unit 140 may also be detachably disposed on a wall surface of the medium unit 120, so that the switching unit 140 can be independently adjusted, and disposition flexibility of the switching unit 140 can be improved.

Correspondingly, the switching unit 140 should also be attached to the wall surface of the medium unit 120, to reduce signal transmission in gas outside the medium unit 120. For example, the switching unit 140 may also be disposed on the wall surface of the medium unit 120 through a light-transmitting bonding layer.

The medium unit 120 includes the plurality of wall surfaces, configured to carry the switching unit 140, the dispersion unit 130, the first reflection unit 150, the input and output unit 110, and the like, so that some of the switching unit 140, the dispersion unit 130, the first reflection unit 150, the input and output unit 110, and the like may be located on a same wall surface of the medium unit 120. For example, as shown in FIG. 4, the input and output unit 110 and the switching unit 140 may be located on a same wall surface.

Certainly, in some examples, the switching unit 140, the dispersion unit 130, the first reflection unit 150, the input and output unit 110, and the like may all be located on different wall surfaces. A specific disposition manner is not limited in embodiments of this application, provided that the foregoing optical path function can be implemented.

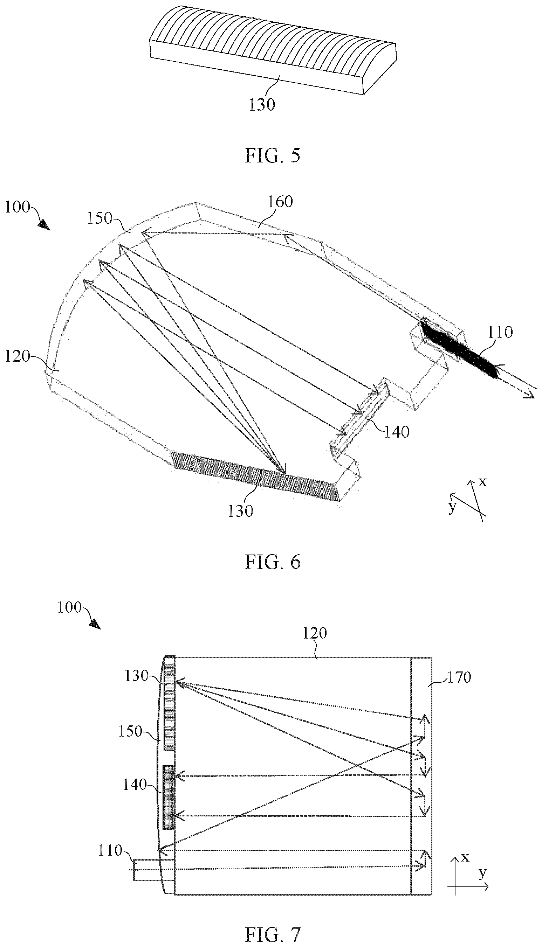

FIG. 5 is a diagram of a structure of a dispersion unit according to an embodiment of this application.

In this embodiment of this application, as shown in FIG. 5, a dispersion surface of the dispersion unit 130 may be a plane, or a dispersion surface of the dispersion unit 130 may be a curved surface. If the dispersion surface is a curved surface, the deflected sub-beams formed through the switching unit 140 can be collimated on the switching plane, so that each sub-beam can be output from a corresponding output port 112.

FIG. 6 is a diagram of yet another structure of an optical communication device according to an embodiment of this application.

As shown in FIG. 6, the optical communication device 100 may further include a second reflection unit 160. The optical signal input from the input port of the input and output unit 110 is first irradiated to the second reflection unit 160, and the second reflection unit 160 reflects the optical signal to the first reflection unit 150, so that the first reflection unit 150 can reflect the optical signal to the dispersion unit 130.

The second reflection unit 160 can adjust an incident angle of the optical signal irradiated to the first reflection unit 150, so that the first reflection unit 150 can perform total reflection, and reflect the optical signal to the dispersion unit 130. In this way, a requirement on the incident angle of the optical signal input through the input and output unit 110 from the wall surface can be lower. This facilitates implementation.

In addition, the second reflection unit 160 can also implement a folding effect on an optical path, to reduce a path length (a length in the direction y) of an optical path between the input and output unit 110 and the first reflection unit 150. This helps further reduce the size of the optical communication device 100.

The second reflection unit 160 may have a same structure as the first reflection unit 150, and the second reflection unit 160 may also be a spherical surface. Certainly, in some examples, the second reflection unit 160 may alternatively be a curved surface of another type, for example, an aspheric surface or another irregular curved surface.

The second reflection unit 160 may also be an optical element that is disposed on a wall surface of the medium unit 120 and that can perform a reflection function. For example, the second reflection unit 160 may be a mirror reflector disposed on the wall surface of the medium unit 120, and a reflection surface of the second reflection unit 160 faces an inner side of the medium unit 120.

Specifically, the second reflection unit 160 may also be detachably disposed on the medium unit 120, so that the second reflection unit 160 can be independently adjusted, and disposition flexibility of the second reflection unit 160 is improved.

Correspondingly, the second reflection unit 160 should also be attached to the wall surface of the medium unit 120, to reduce signal transmission in gas outside the medium unit 120. For example, the second reflection unit 160 may also be disposed on the wall surface of the medium unit 120 through a light-transmitting bonding layer.

Alternatively, the second reflection unit 160 may be a chemical film layer directly formed on the wall surface of the medium unit 120, and has high disposition stability. For example, the second reflection unit 160 may be a high reflection coating directly formed on the wall surface of the medium unit 120 in a manner of spraying, electroplating, or the like.

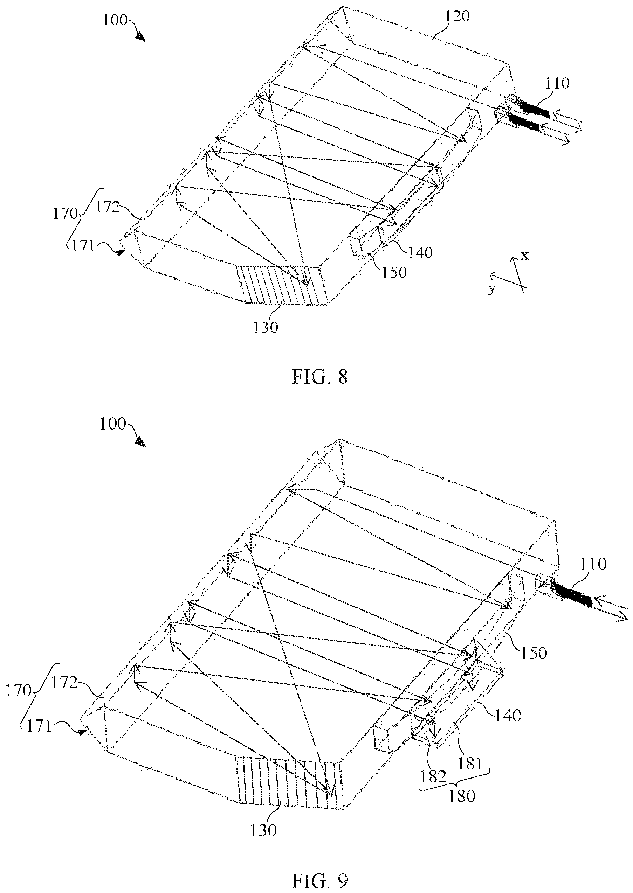

FIG. 7 is a diagram of a still yet structure of an optical communication device according to an embodiment of this application. FIG. 8 is a diagram of a further structure of an optical communication device according to an embodiment of this application.

As shown in FIG. 7, the optical communication device 100 may further include a first optical path folding unit 170. Specifically, the first optical path folding unit 170 is disposed on a wall surface of the medium unit 120, and the first optical path folding unit 170 is configured to fold an optical path, to reduce a path length (a length in the direction y) of the optical path.

Specifically, the first optical path folding unit 170 may reflect, to the first reflection unit 150, the optical signal input from the input port of the input and output unit 110 to the medium unit 120, the optical signal reflected by the first reflection unit 150 is irradiated to the first optical path folding unit 170 again, and the first optical path folding unit 170 reflects the optical signal to the dispersion unit 130. In this way, reflection and folding on optical paths between the input and output unit 110 and the first reflection unit 150 and between the first reflection unit 150 and the dispersion unit 130 are implemented by using the first optical path folding unit 170, and a path length (a length in the direction y) of an optical path between the input and output unit 110 and the dispersion unit 130 is reduced.

With reference to FIG. 8, the plurality of sub-beams emitted after the dispersion unit 130 disperses the optical signal are also transmitted to the first optical path folding unit 170, the first optical path folding unit 170 reflects the plurality of sub-beams to the first reflection unit 150, the first reflection unit 150 collimates the plurality of sub-beams and reflects the plurality of sub-beams to the first optical path folding unit 170 again, and the first optical path folding unit 170 reflects the plurality of sub-beams to the switching unit 140. In this way, reflection and folding on optical paths between the dispersion unit 130 and the first reflection unit 150 and between the first reflection unit 150 and the switching unit 140 are implemented by using the first optical path folding unit 170, and a path length (a length in the direction y) of an optical path between the dispersion unit 130 and the switching unit 140 is reduced. In other words, an optical path between the input and output unit 110 and the switching unit 140 is folded by using the first optical path folding unit 170. This reduces a path length (a length in the direction y) of an optical path between the input and output unit 110 and the switching unit 140, and reduces the length of the medium unit 120, to help further reduce the size of the optical communication device 100. In addition, the switching unit 140 is directly attached to the wall surface of the medium unit 120. In this way, the optical path is folded and the structure is simple.

The first optical path folding unit 170 may have one or more reflection surfaces, as long as the foregoing path of the optical path of the first optical path folding unit 170 can be implemented.

For example, still as shown in FIG. 8, the first optical path folding unit 170 may include a first reflection surface 171 and a second reflection surface 172. The optical signal input from the input and output unit 110 to the medium unit 120 may be transmitted to the first reflection surface 171, the first reflection surface 171 may reflect the optical signal to the second reflection surface 172, and the second reflection surface 172 reflects the optical signal to the first reflection unit 150. The optical signal reflected by the first reflection unit 150 is transmitted to the second reflection surface 172 again, the second reflection surface 172 reflects the optical signal to the first reflection surface 171, and the first reflection surface 171 reflects and transmits the optical signal to the dispersion unit 130.

The plurality of sub-beams obtained through dispersion performed by the dispersion unit 130 may be transmitted to the first reflection surface 171, the first reflection surface 171 reflects and transmits the plurality of sub-beams to the second reflection surface 172, and the second reflection surface 172 reflects the plurality of sub-beams to the first reflection unit 150 again. The optical signal reflected by the first reflection unit 150 is transmitted to the second reflection surface 172 again, the second reflection surface 172 reflects the optical signal to the first reflection surface 171 again, and the first reflection surface 171 reflects and transmits the plurality of sub-beams to the switching unit 140.

The two reflection surfaces are used, to implement two times of reflection and folding, so that the optical path is transmitted between two layers, and the path length (the length in the direction y) of the optical path between the input unit and the switching unit 140 is further compressed. This further folds the optical path and further reduces the size of the optical communication device 100.

Still as shown in FIG. 8 (dashed lines in the figure are optical paths), the multiplexed optical signal input from the input port 111 of the input and output unit 110 to the medium unit 120 is transmitted in the medium unit 120 and irradiated to the first reflection surface 171, and is reflected to the second reflection surface 172 via the first reflection surface 171. The second reflection surface 172 reflects the multiplexed optical signal again, to irradiate the multiplexed optical signal to the first reflection unit 150. The first reflection unit 150 reflects the optical signal, and enables the optical signal to be transmitted to the dispersion unit 130 via the second reflection surface 172 and the first reflection surface 171 in sequence. The dispersion unit 130 disperses the optical signal into the plurality of sub-beams, and enables the plurality of sub-beams to be transmitted to different areas of the switching unit 140 via the first reflection surface 171, the second reflection surface 172, the first reflection unit 150, the second reflection surface 172, and the first reflection surface 171 in sequence. The switching unit 140 respectively deflects, in preset angles, the plurality of sub-beams to form the deflected sub-beams. The deflected sub-beams return along original paths, then the deflected sub-beam is transmitted to the corresponding output port 112 of the input and output unit 110 via the first reflection surface 171, the second reflection surface 172, the first reflection unit 150, the second reflection surface 172, the first reflection surface 171, the dispersion unit 130, the first reflection surface 171, the second reflection surface 172, the first reflection unit 150, the second reflection surface 172, and the first reflection surface 171 in sequence, and the output port 112 outputs the deflected sub-beam to the outside of the optical communication device 100.

The first reflection surface 171 may be perpendicular to the second reflection surface 172, and both the first reflection surface 171 and the second reflection surface 172 may be 45° reflection surfaces. The 45° reflection surface is a reflection surface on which when incident light is irradiated to the reflection surface at a 45° incident angle, an emergent angle of emergent light reflected by the reflection surface is also 45°, that is, the emergent light is perpendicular to the incident light. As shown in FIG. 8, it is assumed that the first reflection surface 171 and the second reflection surface 172 are 45° reflection surfaces. For example, when the plurality of sub-beams reflected by the first reflection unit 150 are respectively irradiated, at 45° incident angles, to the second reflection surface 172, emergent angles of the sub-beams reflected by the second reflection surface 172 each are 45°. In this case, incident angles of the sub-beams irradiated to the first reflection surface 171 each are 45°, and emergent angles of the sub-beams emitted from the first reflection surface 171 each are 45°. In this way, transmission directions of the sub-beams irradiated to the second reflection surface 172 are parallel to and opposite to transmission directions of the sub-beams emitted from the first reflection surface 171, that is, optical paths of the sub-beams each are vertically folded by using the first reflection surface 171 and the second reflection surface 172. This further compresses a path of the optical path, helps further reduce the size of the optical communication device 100, and can also ensure that the plurality of sub-beams are collimated and then irradiated to the switching unit 140.

After reflecting by the first reflection surface 171 and the second reflection surface 172, the sub-beams are emitted in parallel and opposite directions and are irradiated to the switching unit 140. As shown in FIG. 8, the first reflection unit 150 and the switching unit 140 may be located on a same wall surface of the medium unit 120, the input and output unit 110 may also be located on the wall surface, and the first folding unit and the first reflection unit 150 may be respectively located on two opposite wall surfaces of the medium unit 120. Specifically, for example, the second reflection surface 172 is located on an upper side of the first reflection surface 171, and in this case, the first optical path folding unit 170 may be located on a lower side of the first reflection unit 150, to implement the foregoing optical path.

The first optical path folding unit 170 may also be an optical element that is disposed on the wall surface of the medium unit 120 and that can perform a reflection function. For example, the first optical path folding unit 170 is a mirror reflector disposed on the wall surface of the medium unit 120. It should be understood that the mirror reflector may have one or more reflection surfaces. For example, as shown in FIG. 8, the first optical path folding unit 170 may include two reflection surfaces, to form the first reflection surface 171 and the second reflection surface 172 respectively.

Specifically, the first optical path folding unit 170 may also be detachably disposed on the medium unit 120, so that the first optical path folding unit 170 can be independently adjusted, and disposition flexibility of the first optical path folding unit 170 is improved.

Correspondingly, the first optical path folding unit 170 should also be attached to the wall surface of the medium unit 120, to reduce signal transmission in gas outside the medium unit 120. For example, the first optical path folding unit 170 may also include a light-transmitting attached surface, and the attached surface may be bonded to the wall surface of the medium unit 120 through a light-transmitting bonding layer, to implement disposition of the first optical path folding unit 170 on the wall surface. For example, the first optical path folding unit 170 is a triangular prism mirror reflector, and the first reflection surface 171, the second reflection surface 172, and the attached surface may be three surfaces of a triangular prism. The optical signal or the sub-beams may be transmitted to the first optical path folding unit 170 through the attached surface, and irradiated to the first reflection surface 171 or the second reflection surface 172.

Alternatively, the first optical path folding unit 170 may be an optical film layer directly formed on the wall surface of the medium unit 120, and has high disposition stability. For example, a high reflection coating may be directly formed on the wall surface of the medium unit 120 in a manner of spraying, electroplating, or the like, to form the first optical path folding unit 170. It should be noted that a reflective film layer may be formed on a wall surface of the medium unit 120 to form the first optical path folding unit 170, or reflective film layers may be formed on a plurality of wall surfaces of the medium unit 120 to form the first optical path folding unit 170. For example, reflective film layers are formed on two wall surfaces of the medium unit 120 respectively, where a reflective film layer on one wall surface forms the first reflection surface 171, and a reflective film layer on the other wall surface forms the second reflection surface 172.

FIG. 9 is a diagram of a still further structure of an optical communication device according to an embodiment of this application.

As shown in FIG. 9, the optical communication device 100 may further include a second optical path folding unit 180, and the switching unit 140 may be disposed on the second optical path folding unit 180. The sub-beams reflected by the first optical path folding unit 170 may be transmitted to the second optical path folding unit 180, and the second optical path folding unit 180 reflects the sub-beams to the switching unit 140, so that the switching unit 140 can implement independent control on each of the sub-beams of a plurality of wavelengths. This improves flexibility of a design of the structure of the optical communication device 100, and helps increase application scenarios of the optical communication device 100.

The second optical path folding unit 180 may have one or more reflection surfaces, as long as an optical path of the second optical path folding unit 180 can be implemented.

For example, as shown in FIG. 9, the second optical path folding unit 180 may include a reflection surface, namely, a third reflection surface 181, and the second optical path folding unit 180 further includes a light-transmitting surface 182. The sub-beams reflected by the first optical path folding unit 170 are irradiated to the third reflection surface 181, the third reflection surface 181 reflects the sub-beams to the light-transmitting surface 182, and the plurality of sub-beams are irradiated to different areas of the switching unit 140 through the light-transmitting surface 182.

Still as shown in FIG. 9 (dashed lines in the figure are optical paths), the multiplexed optical signal input from the input port of the input and output unit 110 to the medium unit 120 is transmitted in the medium unit 120, and is transmitted to the first reflection unit 150 via the first reflection surface 171 and the second reflection surface 172 in sequence. The first reflection unit 150 reflects the optical signal, and enables the optical signal to be transmitted to the dispersion unit 130 via the second reflection surface 172 and the first reflection surface 171 in sequence. The dispersion unit 130 disperses the optical signal into the plurality of sub-beams, and enables the plurality of sub-beams to be transmitted to the third reflection surface 181 via the first reflection surface 171, the second reflection surface 172, the first reflection unit 150, the second reflection surface 172, and the first reflection surface 171 in sequence. The third reflection surface 181 reflects the plurality of sub-beams, and enables the sub-beams to be irradiated to different areas of the switching unit 140 through the light-transmitting surface 182. The switching unit 140 respectively deflects, in preset angles, the plurality of sub-beams to form the deflected sub-beams. The deflected sub-beams return along original paths, the deflected sub-beam is irradiated to the corresponding output port of the input and output unit 110 via the light-transmitting surface 182, the third reflection surface 181, the first reflection surface 171, the second reflection surface 172, the first reflection unit 150, the second reflection surface 172, the first reflection surface 171, the dispersion unit 130, the first reflection surface 171, the second reflection surface 172, the first reflection unit 150, the second reflection surface 172, and the first reflection surface 171 in sequence, and the output port 112 outputs the deflected sub-beams to the outside of the optical communication device 100.

The third reflection surface 181 and the light-transmitting surface 182 may be tilted relative to each other, an included angle between the third reflection surface 181 and the light-transmitting surface 182 may be a 45° angle, and the third reflection surface 181 is a 45° reflection surface. As shown in FIG. 9, the switching unit 140 is disposed on the light-transmitting surface 182. When the plurality of sub-beams reflected by the first optical path folding unit 170 are respectively irradiated, at 45° incident angles, to the third reflection surface 181, and emergent angles of the sub-beams emitted from the third reflection surface 181 each are 45°, the plurality of sub-beams are collimated and irradiated to the light-transmitting surface 182. This can ensure that the plurality of sub-beams are collimated and irradiated to the switching unit 140.

For example, the second reflection surface 172 is located on an upper side of the first reflection surface 171. The second optical path folding unit 180 may be located on a lower side of the first reflection unit 150, the light-transmitting surface 182 may be located on a side that is of the third reflection surface 181 and that is opposite to the first reflection unit 150, and the switching unit 140 may be located on a side that is of the light-transmitting surface 182 and that is opposite to the third reflection surface 181.

The second optical path folding unit 180 may also be an optical element disposed on a wall surface of the medium unit 120 and having a reflection surface. For example, the second optical path folding unit 180 is a mirror reflector disposed on the wall surface of the medium unit 120. The second optical path folding unit 180 may also be detachably disposed on the medium unit 120, so that the second optical path folding unit 180 can be independently adjusted, and disposition flexibility of the second optical path folding unit 180 is improved.

Correspondingly, the second optical path folding unit 180 should also be attached to the wall surface of the medium unit 120, to reduce signal transmission in gas outside the medium unit 120. For example, the second optical path folding unit 180 may also include a light-transmitting attached surface, and the attached surface may be bonded to the wall surface through a light-transmitting bonding layer.

As shown in FIG. 9, the second optical path folding unit 180 may also be a triangular prism mirror reflector, and the third reflection surface 181, the light-transmitting surface 182, and the attached surface may be three surfaces of a triangular prism. The optical signal or the sub-beams may be transmitted to the second optical path folding unit 180 through the attached surface and be transmitted via the third reflection surface 181 and the light-transmitting surface 182 in sequence.

Alternatively, the second optical path folding unit 180 may be an optical film layer directly formed on the wall surface of the medium unit 120, and has high disposition stability. For example, a high reflection coating may be directly formed on the wall surface of the medium unit 120 in a manner of spraying, electroplating, or the like, and the high reflection coating and one light-transmitting wall surface of the medium unit 120 respectively form the third reflection surface 181 and the light-transmitting surface 182, to form the second optical path folding unit 180; or the high reflection coating and the antireflection coating may be directly formed on two wall surfaces of the medium unit 120 respectively, and the high reflection coating and the antireflection coating respectively form the third reflection surface 181 and the light-transmitting surface 182, to form the second optical path folding unit 180.

It should be noted that, when the switching unit 140 is a deflection-related optical path switching device, for example, when the switching unit 140 is a liquid crystal on silicon chip, the second optical path folding unit 180 may further include a polarization element and a half-wave plate, to implement deflection adjustment on the sub-beams, so that the deflected sub-beams can meet a polarization requirement of the switching unit 140.

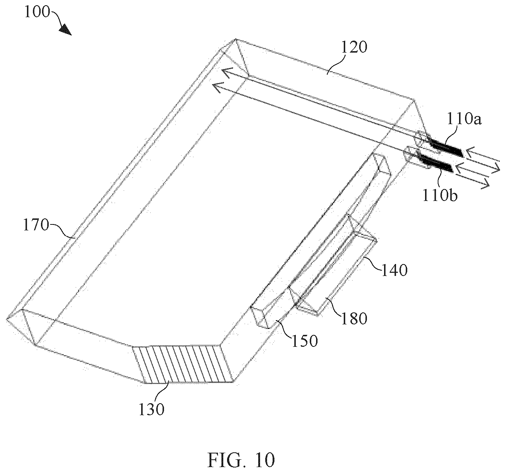

FIG. 10 is a diagram of a yet further structure of an optical communication device according to an embodiment of this application.

As shown in FIG. 10, in this embodiment of this application, the optical communication device 100 may include a plurality of input and output units 110. In this way, integration of a plurality of optical signals can be implemented, so that a plurality of multiplexed beams can be simultaneously input into the optical communication device 100, to help reduce costs of an entire transmission system.

The plurality of input and output units 110 may be disposed on a same wall surface of the medium unit 120 at intervals. Specifically, the plurality of input and output units 110 may be arranged on the input and output wall surface 120a of the medium unit 120 in an array. This helps reduce the wall surfaces required by the medium unit 120, and further reduce a size of the medium unit 120. For example, as shown in FIG. 10, there may be two input and output units: an input and output unit 110a and an input and output unit 110b. The input and output unit 110a and the input and output unit 110b are disposed on the input and output wall surface 120a at an interval.

The input and output unit 110 may further include optical elements such as an optical lens array, a polarization beam splitting element, a cylindrical lens, and a waveplate, and can implement a function of adjusting and controlling an optical path and a light spot of an input optical signal, so that a light spot of a sub-beam transmitted to the switching unit 140 meets the requirement of the switching unit 140. This helps improve performance of the optical communication device 100.

Finally, it should be noted that the foregoing embodiments are merely intended to describe the technical solutions of embodiments of this application, and are not intended to limit embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An optical communication device, comprising a medium unit, wherein the medium unit is a light-transmitting solid-state medium, and the medium unit comprises a plurality of wall surfaces; and
further comprising an input and output unit, a dispersion unit, and a switching unit that are separately disposed on wall surfaces of the medium unit, wherein the input and output unit comprises an input port and a plurality of output ports, and the input port is configured to: input an optical signal into the medium unit, and enable the optical signal to be transmitted to the dispersion unit, wherein the optical signal comprises a plurality of sub-beams of different wavelengths; and
the dispersion unit is configured to: disperse the optical signal into the plurality of sub-beams on a dispersion plane, and enable the plurality of sub-beams to be transmitted to different partitions of the switching unit, and the switching unit is configured to: respectively deflect, in preset angles, the plurality of sub-beams on a switching plane to form deflected sub-beams, enable the deflected sub-beam to be output from the medium unit and transmitted to a corresponding output port, wherein the output port is configured to output the deflected sub-beam.

2. The optical communication device according to claim 1, further comprising a first reflection unit disposed on a wall surface of the medium unit, wherein
the first reflection unit is configured to reflect, to the dispersion unit, the optical signal input into the medium unit; and
the first reflection unit is further configured to: collimate the sub-beams obtained through dispersion performed by the dispersion unit and reflect the sub-beams to the switching unit.

3. The optical communication device according to claim 2, wherein a reflection surface of the first reflection unit is a curved surface.

4. The optical communication device according to claim 2 or 3, further comprising a second reflection unit disposed on a wall surface of the medium unit, wherein
the second reflection unit is configured to reflect, to the first reflection unit, the optical signal input into the medium unit.

5. The optical communication device according to any one of claims 2 to 4, further comprising a first optical path folding unit disposed on a wall surface of the medium unit, wherein
the first optical path folding unit is configured to reflect, to the first reflection unit, the optical signal input into the medium unit, and the first optical path folding unit is further configured to reflect, to the dispersion unit, the optical signal reflected by the first reflection unit; and
the first optical path folding unit is further configured to reflect, to the first reflection unit, the sub-beams obtained through dispersion performed by the dispersion unit, and the first optical path folding unit is further configured to reflect, to the switching unit, the sub-beams reflected by the first reflection unit.

6. The optical communication device according to claim 5, wherein the first optical path folding unit comprises a first reflection surface and a second reflection surface;
the first optical path folding unit is configured to enable the optical signal input into the medium unit to be transmitted to the first reflection unit via the first reflection surface and the second reflection surface in sequence, and the first optical path folding unit is further configured to enable the optical signal reflected by first reflection unit to be transmitted to the dispersion unit via the second reflection surface and the first reflection surface in sequence; and
the first optical path folding unit is further configured to enable the sub-beams obtained through dispersion performed by the dispersion unit to be transmitted to the first reflection unit via the first reflection surface and the second reflection surface in sequence, and the first optical path folding unit is further configured to enable the sub-beams reflected by the first reflection unit to be transmitted to the switching unit via the second reflection surface and the first reflection surface in sequence.

7. The optical communication device according to claim 6, wherein the first reflection surface is perpendicular to the second reflection surface, and both the first reflection surface and the second reflection surface are 45° reflection surfaces.

8. The optical communication device according to any one of claims 5 to 7, further comprising a second optical path folding unit disposed on a wall surface of the medium unit, wherein the switching unit is disposed on the second optical path folding unit; and
the second optical path folding unit is configured to reflect, to the switching unit, the sub-beams reflected by the first optical path folding unit.

9. The optical communication device according to claim 8, wherein the second optical path folding unit comprises a third reflection surface and a light-transmitting surface, and the switching unit is disposed on the light-transmitting surface; and
the second optical path folding unit is configured to enable the sub-beams reflected by the first optical path folding unit to be transmitted to the switching unit via the third reflection surface and the light-transmitting surface in sequence.

10. The optical communication device according to claim 9, wherein the third reflection surface and the light-transmitting surface are disposed at a 45° included angle, and the third reflection surface is a 45° reflection surface.

11. The optical communication device according to any one of claims 5 to 10, wherein the input and output unit, the first reflection unit, and the switching unit are located on a same wall surface of the medium unit; and
the first reflection unit and the first optical path folding unit are respectively located on two opposite wall surfaces of the medium unit.

12. The optical communication device according to any one of claims 2 to 11, wherein the dispersion unit is detachably disposed on a wall surface of the medium unit; and
the first reflection unit is detachably disposed on the wall surface of the medium unit.

13. The optical communication device according to any one of claims 2 to 11, wherein the dispersion unit is a dispersion element formed on a wall surface of the medium unit; and
the first reflection unit is a reflective film layer formed on the wall surface of the medium unit.

14. The optical communication device according to any one of claims 1 to 13, wherein a dispersion surface of the dispersion unit is a curved surface.

15. The optical communication device according to any one of claims 1 to 14, wherein there are a plurality of input and output units, the wall surfaces of the medium unit comprise an input and output wall surface, and the plurality of input and output units are disposed on the input and output wall surface at intervals.

16. The optical communication device according to any one of claims 1 to 15, wherein the input and output unit comprises an optical fiber array, the optical fiber array comprises a plurality of optical fibers, the plurality of optical fibers are configured to form the input port and the output port, and end faces of the plurality of optical fibers are opposite to the input and output wall surface.

17. The optical communication device according to any one of claims 1 to 16, wherein a formed material of the medium unit is glass or an organic material.
